(19) Europäisches Patentamt
European Patent Office
Office européen des brevets

(11) **EP 2 553 399 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(21) Anmeldenummer: **11711295.3**

(22) Anmeldetag: **16.03.2011**

(51) Int Cl.:
*G01D 5/245* (2006.01)    *F02B 77/08* (2006.01)

(86) Internationale Anmeldenummer:
**PCT/EP2011/053969**

(87) Internationale Veröffentlichungsnummer:
**WO 2011/120805 (06.10.2011 Gazette 2011/40)**

(54) **VERFAHREN ZUR SYSTEMATISCHEN BEHANDLUNG VON FEHLERN**

METHOD FOR SYSTEMATICALLY TREATING ERRORS

PROCÉDÉ DE TRAITEMENT SYSTÉMATIQUE D'ERREURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2010 DE 102010003561**

(43) Veröffentlichungstag der Anmeldung:
**06.02.2013 Patentblatt 2013/06**

(73) Patentinhaber: **Robert Bosch GmbH
70442 Stuttgart (DE)**

(72) Erfinder:
• **BOEHL, Eberhard
72768 Reutlingen (DE)**
• **BECKER, Bernd
70567 Stuttgart (DE)**
• **PAWLOK, Bernard
70499 Stuttgart (DE)**

(56) Entgegenhaltungen:
**EP-A2- 1 400 785    US-A- 5 117 681**

EP 2 553 399 B1

**Beschreibung**

Die Erfindung betrifft ein Verfahren zur systematischen Behandlung von Fehlern für eine Winkeluhr bei der Übertragung von Positionsinformationen und eine Anordnung zur Durchführung des Verfahrens.

Stand der Technik

Bei der Steuerung von Verbrennungsmotoren werden Sensoren eingesetzt, die eine Position des Motors anzeigen. So ist es bspw. üblich, durch ein fest mit der Kurbelwelle montiertes Geberrad in bestimmten Winkeln Signale, immer wenn eine Markierung beginnt oder endet, von einem Sensor generieren zu lassen. Um eine Synchronisierung mit der aktuellen Motorposition vornehmen zu können, werden dabei üblicherweise im Geberrad eine oder mehrere Markierungen ausgelassen.

In der Druckschrift DE 100 637 55 A1 ist beschrieben, wie eine Synchronisierung mit einer aktuellen Motorposition vorgenommen werden kann, wobei üblicherweise im Geberrad eine oder mehrere Markierungen ausgelassen sind. Da die Markierungspositionen die aktuelle Motorposition allerdings nur sehr grob wiedergeben, wird eine Winkelbasis erzeugt, mit der durch eine genaue definierte Anzahl von Impulsen zwischen zwei Sensorsignalen auch Zwischenpositionen bestimmt werden können. Dazu ist es unter anderem erforderlich, die Zeitdauer bis zum nächsten Sensorsignal vorherzusagen.

Die Druckschrift DE 10 2005 047 922 A1 beschreibt ein Verfahren zur Bestimmung einer Winkeldifferenz zwischen einem ersten und einem zweiten Winkelereignis. Bei dem Verfahren werden Zahnzeiten vorhergehender Zähne ermittelt und sukzessive zu einem Zeitabstand addiert, wobei die Zahnwinkel zu dem Differenzwinkel addiert und die Zahnzeiten aus den Zahnzeiten eines vorhergehenden Arbeitstakts multipliziert und mit einem Korrekturfaktor ermittelt werden.

Aus der EP 1 400 785 A2 ist Verfahren zur Korrektur des Messfehlers eines Gebers bekannt. Dieser Fehler setzt sich aus einem bekannt systematischen, einem unbekannt systematischen und einem zufälligen Fehler zusammen. Der bekannt systematische und der unbekannt systematische Fehler werden unabhängig voneinander korrigiert. Die US 5 117 681 A offenbart die Korrektur systematischer Herstellungsfehler bei Positionsgebern einer internen Verbrennungsmaschine in einer verbrennungsfreien Phase des Motorbetriebs.

Bei der Übertragung von Positions- bzw. Winkelsignalen können unterschiedliche Arten von Fehlern vorkommen. Systematische Fehler bei der Übertragung von Winkelinformationen mittels eines Geberrads bei einem Verbrennungsmotor können bspw. dadurch auftreten, dass Zähne des Geberrads ausgebrochen sind oder dass der Abstand zwischen diesen Zähnen nicht gleich ist oder ungleich erscheint. Dabei wird unter ungleich erscheinen bspw. verstanden, dass zwei Zähne fehlen und die Lücke zwar exakt dreimal so groß sein kann, wie der Abstand ohne Lücke aber die Signalerfassung und Übertragung durch Verzerrungen dieses exakte Verhältnis nicht widerspiegelt. Derartige Bedingungen werden bisher nur mit einer reinen Softwarelösung berücksichtigt.

Offenbarung der Erfindung

Vor diesem Hintergrund werden ein Verfahren zur systematischen Behandlung von Fehlern nach Anspruch 1 und eine Anordnung zur Durchführung des Verfahrens mit den Merkmalen des Anspruchs 10 vorgestellt. Ausführungsformen ergeben sich aus den abhängigen Ansprüchen, der Beschreibung und den Zeichnungen.

Die Berücksichtigung systematischer Fehler wird somit bei einem Geberrad mit Zähnen dadurch gewährleistet, dass ein Profil der Zahnabstände in einem ersten Speicherbereich abgelegt wird. In diesem Profil ist für jeden Zahnabstand ein Speicherort reserviert, in dem ein Feld vorgesehen ist, das die Anzahl der nominellen Abstandswerte enthält. Normale Zahnabstände haben dabei den Wert 1. Wenn zwei Zähne fehlen, wird der Wert 3 eingetragen. In einem weiteren Feld des genannten Speicherworts wird eine Abweichung von dem idealen Abstand eingetragen.

Ist zum Beispiel für die genauere Positionsbestimmung vorgesehen, dass zwischen zwei Zähnen eine Anzahl n von Impulsen ausgegeben werden soll, so kann man in das Feld für die Abweichung vom idealen Zustand eine positive oder negative Zahl eintragen, die zusätzliche oder überflüssige Impulse für dieses Inkrement bedeutet.

Das Geberrad erzeugt bei der Rotation an einem Sensor Impulse, die an eine Auswerteschaltung, nämlich die vorgestellte Schaltungsanordnung, gegeben werden. Jeder dieser Eingangsimpulse wird beim Eintreffen mit einem Zeitstempel von einer Zeitbasis versehen. Aus der Differenz der Zeitstempel werden Differenzzeiten berechnet. Diese gemessenen Kenngrößen wie Zeitstempel für einen empfangenen Impuls und die Zeitdauer zwischen zwei Impulsen werden in zwei weiteren Speicherbereichen abgelegt.

Da beim Start des Motors dessen Position nicht bekannt ist, kann man zu diesem Zeitpunkt keine Relation zum Profil herstellen. Man legt deshalb die Werte für die Zeitstempel und die Werte für die Zeitdauern in den entsprechenden Speicherbereichen ab, beginnend für den Adresszeiger- bzw. Adresspointerwert 0 und inkrementiert diesen Adresspointer mir jedem relevanten Sensorsignal. Als relevant wird dabei gegebenenfalls nur eine Flanke des Sensors in einer bestimmten Richtung gesehen (high-low oder low-high). Für alle drei Speicherbereiche sind u.U. verschiedene Adresspointer vorgesehen. Eine Lücke wird noch nicht sicher als solche erkannt und deshalb als ein Inkrement angesehen. Wenn durch die Erkennung der Lücke, ggf. erst nach der Lücke selbst, die Position bekannt ist, setzt die CPU den Adresspointer für das Profil in der entsprechenden Relation zu dem Speicherbereich für die Inkrementdauer.

Um die Berechnung von Summen der Inkrementdauern einfach vornehmen zu können, kann für die Speicherung der Zeitstempel vorgesehen sein, dass für die Lücken auch Einträge von berechneten Zeitstempeln für die fehlenden Zähne vorgenommen werden. Dadurch muss bei einer Berechnung über mehrere Inkremente nicht unterschieden werden, ob eine Lücke inbegriffen ist oder nicht. Die Anzahl der Speichereinträge für die Zeitstempel kann deshalb um die Anzahl von fehlenden Zähnen größer sein als die Anzahl der Speichereinträge für die Zeitdauer. In diesem Fall muss der Speicherbereich für Zeitstempel eigene Adresspointer besitzen. Wenn eine Lücke im Profil vorgesehen ist, wird der entsprechende Adresspointer für die Zeitstempel mit virtuellen Zeitabschnitten um die Anzahl der virtuellen Inkremente, d.h. um den entsprechenden Eintrag vom Profil, erhöht. Nachträglich werden die übersprungenen Speichereinträge regelmäßig so gefüllt, dass eine gleichmäßige Aufteilung der Zeitdauer auf die virtuellen Inkremente erfolgt.

Hierin besteht auch ein Unterschied zwischen einer Software- und einer Hardwarelösung. Da beim Start die Position der Lücke nicht bekannt ist, müssen eventuell vorgesehene virtuelle Einträge nachträglich eingefügt werden. Die dadurch notwendige Verschiebung im Speicher kann zu Daten-Konsistenzproblemen führen, weil sowohl die Hardware als auch die CPU auf die gleichen Daten schreibend und lesend zugreifen können. Das kann dazu führen, dass ggf. auf die virtuellen Einträge, insbesondere für die Speicherung der Inkrementdauer, verzichtet werden muss. Das vorgestellte Verfahren, ohne Berücksichtigung von virtuellen Einträgen für die Inkrementdauer, bietet sich insbesondere für eine Hardwarelösung an.

Bei einem Elektromotor werden üblicherweise drei Sensoren benutzt, deren Daten zum Zwecke der Richtungserkennung des Motors separat ausgewertet werden können. Wenn die Sensoren genau so angeordnet sind, dass die Polarisationswechsel nicht bei dem gleichen Winkel erfolgen und die Winkelwerte bis zum nächsten Polarisations-wechsel gleichmäßig auftreten, so kann man für die Geschwindigkeits- und Positionserkennung die drei Signale bspw. antivalent verknüpfen (EXOR). Der Winkel zwischen zwei aufeinanderfolgenden Flanken des so gewonnenen kombinierten Eingangssignals sollte konstruktiv bedingt möglichst gleich sein.

Besitzt ein Elektromotor mit Permanentmagneten nur ein Polpaar auf 360° Winkel, d.h. über 180° Südpol und über die restlichen 180° Nordpol, so werden drei Sensoren S0, S1 und S2 so angeordnet, dass sie um jeweils 120° zueinander versetzt sind. Wenn die Sensoren auf die Richtung des magnetischen Felds reagieren, erfolgt dann alle 60° an genau einem Sensor ein Signalwechsel. Aus den drei Signalen wird durch die antivalente Verknüpfung miteinander ein kombiniertes Signal Sx gebildet.

Üblich sind Motoren mit Permanentmagneten, die mehrere Polpaare auf einer Umdrehung von 360° angeordnet haben. Ist bspw. ein Motor mit acht Polpaaren vorgesehen, dann sind jeweils auf 22,5° Winkel ein Nordpol und ein Südpol in abwechselnder Folge angeordnet. Für einen solchen Motor mit acht Polpaaren ist eine elektrische Umdrehung, d.h. einmal Südpol und einmal Nordpol, schon nach 45° erreicht und für eine mechanische Umdrehung liegen somit acht elektrische Umdrehungen vor.

Die Sensoren werden typischerweise bei einem solchen Motor mit acht Polpaaren um 15° versetzt angeordnet. Die Sensoren können dabei entweder auf die Permanentmagnete ausgerichtet sein und auf die Richtung des magnetischen Flusses reagieren oder auch auf ein zusätzlich angebrachtes metallisches Geberrad.

Man kann dann auch hier auf jedes dieser Inkremente die gleiche Anzahl von Positionsimpulsen gleichmäßig verteilen, um eine genauere Positionsbasis zur Verfügung zu haben. Es ist ebenfalls möglich, konstruktiv bedingte Abweichungen durch eine höhere oder geringere Anzahl von Impulsen zu bedienen. Die entsprechenden Einträge sind im Profil wie bei den Verbrennungsmotoren vorzusehen. Sogar der Ausfall eines Sensors kann berücksichtigt werden, indem im Profil für die Anzahl der virtuellen Inkremente eine 2 dort eingetragen wird, wo ein Sensorsignal fehlt. Das ist dann bspw. eine Folge 1-1-2-1-1-2-..., die periodisch fortgesetzt wird. Selbst eine Richtungserkennung ist dann noch möglich.

Nach einer Synchronisation des Adresspointers für die Datenwerte mit dem Adresspointer des Profils ist nach jedem Signalwechsel Sx bekannt, in welchem Inkrement man sich befindet. Die typischerweise von der CPU programmierten Abweichungen der Impulszahl von der Sollimpulszahl wird voraussehend aus dem Profil geholt und in dem entsprechenden Inkrement bei der Aussendung von Impulsen berücksichtigt. Die Abweichung kann positiv oder auch negativ sein. Entsprechend werden mehr oder weniger Impulse an den Positionsgeber ausgegeben.

Wenn ein Sensor ausgefallen ist, liest man ebenfalls voraussehend das Profil 1-1-2-1-1-2- ... ein und benutzt den im Profil gelesenen Wert (1 oder 2) als Faktor, mit dem man die nominal vorgesehenen Impulse multipliziert. Anschließend wird der Wert für die systematische Abweichung hinzuaddiert (positiv oder negativ) und damit der Wert der auszugebenden Impulse für den Positionsgeber bestimmt.

Es ist zu berücksichtigen, dass neben mechanischen Einflüssen des Geberrades oder der Sensoren bei den Elektromotoren auch elektrische Einflüsse wirksam sein können. So erscheint zum Beispiel eine Lücke mit zwei fehlenden Zähnen bei einem Verbrennungsmotor nicht notwendigerweise im elektrischen Signal dreimal so lang wie ein normaler Zahnabstand ohne Lücke. Auch diese elektrischen Verzerrungen können in den systematischen Abweichungen in gleicher Weise berücksichtigt werden und mit im Profil abgelegt werden.

Für die Vorhersage eines Zeitintervall kann man bspw. annehmen, dass das laufende Inkrement genauso lange dauern wird wie das vorangegangene, wenn kein Zahn fehlt, d.h. im Profil ist jeweils eine 1 eingetragen. Es gilt:

$$CDT\_TX = DT\_T * QDT\_T,$$

wenn CDT_TX die vorherzusagende Intervalldauer ist, DT_T die Dauer des letzten gemessenen Zeitintervalls ist und QDT_T das Verhältnis der Vorgabewerte oder Messwerte des vorherzusagenden Intervalls zu dem letzten Intervall ist. Da die Messwerte für das vorherzusagende Intervall noch nicht vorliegen können, nutzt man bei der Verwendung von Messwerten die Periodizität der Ereignisse und berechnet dann QDT_T aus dem Verhältnis der Messwerte der Inkremente von mindestens einer elektrischen Umdrehung vorher. Dazu kann man natürlich auch eine volle mechanische Umdrehungen (8 elektrische Umdrehungen) für die Vorhersage benutzen. Betrachtet man nur die Vorgabewerte, so errechnet sich dieses Verhältnis QDT_T dabei aus der Anzahl der pro Intervall vorgegebenen Impulse plus die systematische Abweichung. Nimmt man diesen Wert entsprechend für jedes der beiden betrachteten Intervalle und setzt diese beiden Werte ins Verhältnis, so erhält man QDT_T.

Entsprechend kann man bei Vorliegen einer Lücke die Anzahl der pro Intervall vorgegebenen Impulse mit der im Profil angegebenen Anzahl der virtuellen Inkremente multiplizieren und den Korrekturwert entsprechend addieren. Setzt man die so berechneten Werte der betrachteten Intervalle zueinander ins Verhältnis, so erhält man den Wert QDT_T entsprechend auch für eine Lücke und kann damit mit der gleichen Formel die erwartete Dauer des momentanen Intervalls auch bei Lücken vorhersagen. In einer weiteren Ausgestaltung der Erfindung kann man QDT_T auch aus den gemessenen Verhältnissen der Impulsdauern berechnen, wie schon vorstehend beschrieben wurde. Insbesondere wenn die Messwerte von periodisch vorliegenden Ereignissen die gleichen Inkremente, nämlich nur eine oder mehrere Perioden zurück, betreffen.

So können bspw. die Messwerte für einen periodischen Zeitraum gespeichert und das Verhältnis der betreffenden Intervalle z.B. eine Periode zuvor bestimmt werden. Dieses gemessene Verhältnis kann man dann wie dort beschrieben auch mit der letzten gemessenen Intervall-Zeitdauer multiplizieren, wobei man noch einen mittleren Fehler zu der gemessenen Intervall-Zeitdauer addieren kann, bevor man die Multiplikation durchführt. In dem Verhältnis der Messwerte sind dann schon systematische Abweichungen enthalten. Die Vorhersage des momentanen Zeitintervalls ist damit sehr präzise möglich.

Wenn es jedoch darauf ankommt, das betreffende Zeitintervall bezüglich der erreichten Positionen (Winkel) noch feiner aufzulösen, indem man bspw. eine Winkeluhr oder allgemeiner einen Positionszähler mit Impulsen ansteuert, so wird man auch versuchen, die Anzahl der generierten Impulse für einen systematisch größeren Abschnitt zu erhöhen und entsprechend für den systematisch kleineren Abschnitt zu verkleinern. Die durchschnittliche Zahl von Impulsen kann dann mittels der im Profil vorgegebenen Abweichung korrigiert werden. Dazu kann dieser Korrekturwert (positiv oder auch negativ) zu der festen durchschnittlichen Anzahl addiert werden und über das Intervall gleichmäßig verteilt werden.

Die vorgestellte Erfindung ermöglicht somit, zumindest in einigen der Ausführungsformen, eine Schaltungsanordnung zur Berücksichtigung von systematischen Fehlern von Positionsgebern, bei denen für typischerweise periodisch vorgesehene Positionssignale der im mittel gemessene Abstand zwischen zwei Positionssignalen in einem Profil berücksichtigt wird, das in dem ersten Speicherbereich abgelegt ist. In diesem Profil können sowohl das systematische Fehlen von Positionssignalen als auch die systematische Abweichung der gemessenen Positions= bzw. Winkelwerte berücksichtigt werden.

Typischerweise ist bei dem beschriebenen Verfahren vorgesehen, eine Synchronisation zwischen den Kenngrößen in dem weiteren Speicherbereich und dem Profil in dem ersten Speicherbereich dadurch herzustellen, dass die beiden Adresszeiger bis auf eine Differenz zueinander gleich sind und die in dem Profil gespeicherten Werte dazu genutzt werden, die Anzahl der an die Winkeluhr ausgegebenen Impulse zu ändern.

Die Synchronisation wird bspw. erzielt, indem ein Adresszeiger von dem Profil entsprechend gesetzt wird.

Der aktuelle Speicherbereich für das Profil wird durch den Adresszeiger angezeigt, wobei üblicherweise eine zentrale Recheneinheit bzw. CPU diesen Adresszeiger in Relation zu anderen Adresszeigern mit aktuell gemessenen Werten so setzt, dass eine Synchronisation zwischen den gemessenen Daten und dem Profil hergestellt wird und auf diese Weise systematische Abweichungen bei der Berechnung von genaueren Positionssignalen und für die Vorhersage von Zeitintervallen berücksichtigt werden.

In dem Profil kann bspw. ein Faktor angegeben sein, mit dem der Abstand zwischen zwei Positionssignalen zu multiplizieren ist. Ebenso kann in dem Profil ein vorzeichenbehafteter Wert angegeben sein, der einer inkrementellen Abweichung entspricht.

Weiterhin kann vorgesehen sein, dass der durchschnittliche Wert von Sub-Positionssignalen mit dem besagten Faktor multipliziert wird und die besagte inkrementelle Abweichung zu diesem Produkt addiert wird. Der so korrigierte Wert wird für die Generierung von Sub-Positionssignalen benutzt.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen

Figur 1    zeigt in schematischer Darstellung ein Geberrad und einen Sensor zur Erzeugung von Signalen, die eine Winkelstellung einer Welle repräsentieren.

Figur 2    zeigt Signale des Sensors aus Figur 1.

Figur 3    zeigt weiterverarbeitete Signale, die von den Signalen der Figur 2 abgeleltet sind.

Figur 4    zeigt weitere weiterverarbeitete Signale, die von den Signalen der Figur 2 abgeleitet sind.

Figur 5    zeigt eine Sensorvorrichtung zur Erzeugung eines Positionssignals bei einem Elektromotor.

Figur 6    zeigt einen Rotor eines Elektromotors.

Figur 7    zeigt in einer schematischen Darstellung eine Ausführungsform der vorgestellten Anordnung zur Durchführung des beschriebenen Verfahrens.

Figur 8    zeigt Signalverläufe von Sensoren.

Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

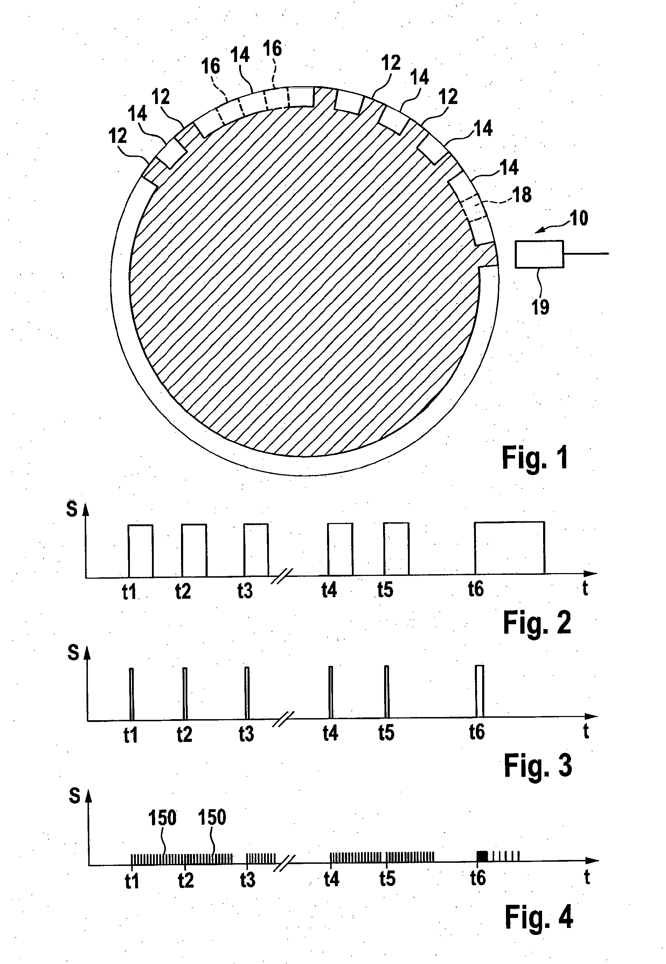

In Figur 1 ist ein Geberrad bzw. ein Impulsgeberad 10 dargestellt. Dieses weist eine Anzahl von Zähnen 12 auf, zwischen denen jeweils Zahnabstände 14 vorgesehen sind. Die Darstellung zeigt weiterhin zwei vorgesehene Lücken 16 in einem Zahnabstand 14 und eine zusätzliche Lücke 18 in einem anderen Zahnabstand 14.

Die Zahnabstände 14 dienen dazu, eine bestimmte Position des Geberrads 10 bzw. einer mit dem Geberrad 10 verbundenen Welle eindeutig zu kennzeichnen.

Normale Zahnabstände 14 haben den Wert 1. Wenn zwei Zähne 12 fehlen, wie bspw. durch die beiden Lücken 16, wird der Wert 3 eingetragen. Die zusätzliche Lücke 18 hat den Wert bzw. Eintrag 2.

Die Zähne 12 streichen an einem Sensor 19 vorbei, wobei der Sensor 19 einen hohen Signalpegel, d.h. ein High-Signal ausgibt, wenn sich ein Zahn 12 unmittelbar vor dem Sensor 19 befindet, und einen niedrigen Signalpegel, d.h. ein Low-Signal, wenn sich unmittelbar vor dem Sensor 19 eine Lücke 16 bzw. 18 befindet. Das Ausgangssignal des Sensors 19 wird beispielhaft in Figur 2 wiedergegeben.

In der Figur 2 wird das Ausgangssignal S des Sensors 19 gegen die Zeit t aufgetragen. Wie zu erkennen ist, springt das Signal S des Sensors 19 zum Zeitpunkt t1 von einem Lowpegel auf einen Highpegel und behält dieses Highpegel bei, solange der Zahn 12 an dem Sensor 19 vorbeibewegt wird. Wenn sich dann der Zahn 12 an dem Sensor 104 vorbeibewegt hat, fällt der Signalpegel S wieder auf den Wert 0. Zum Zeitpunkt t2 springt dann der Signalpegel wieder auf den Wert high, da dann der nachfolgende Zahn 12 vor dem Sensor 19 auftaucht. Entsprechend wird in der Figur 2 jeweils zum Zeitpunkt t1, t2, t3, t4, t5 und t6 ein Springen des Signalpegels S gezeigt. Die Signale, die zu den Zeitpunkten t1, t2, t3, t4, t5 gezeigt werden, gehören zu einer normalen Drehung der Welle in eine Richtung. Zwischen den Zeitpunkten t5 und t6 erfolgt eine Umkehrung der Drehrichtung der Welle. Die sich daraus ergebenden Konsequenzen werden weiter unten diskutiert.

Für die weitere Verarbeitung der Signale des Sensors 19 werden nicht die Signale nach der Figur 2, sondern nur die positiven Schaltflanken d.h. vom Lowpegel zum Highpegel für eine Weiterverarbeitung berücksichtigt. In der Figur 3 wird die als Reaktion zu diesen positiven Schaltflanken vom Signallevel S = low zu Signallevel S = high gezeigt Durch eine Vorverarbeitung der Sensorsignale entweder direkt im Sensor 19 oder in einer nachgelagerten Verarbeitungseinheit werden die unmittelbaren Sensorsignale der Figur 2 in die Signale, die in der Figur 3 gezeigt werden, umgewandelt. Für jede positive Schaltflanke wird ein Rechtecksignal mit einer definierten Breite erzeugt. Bei einer Drehung der Welle in einer ersten Richtung, wie dies zu den Zeitpunkten t1, t2, t3, t4 und t5 der Fall ist, wird ein Rechtecksignal mit einer definierten Breite von beispielsweise $45\mu s$ erzeugt. Wenn eine Drehung der Welle in einer entgegengesetzten Richtung zur ersten Richtung festgestellt wird, wird ein Signal einer anderen Breite erzeugt, wie dies zum Zeitpunkt t6 in der Figur 3 gezeigt wird.

In Figur 4 sind insbesondere Positionssignale bzw. -impulse 150 gezeigt, die zwischen zwei Impulsen des Sensors 19 generiert werden.

Das Signal zum Zeitpunkt t6 ist in seiner Breite klar unterscheidbar. Beispielsweise kann das Signal, das dem Zeitraum t6 zugeordnet ist, eine Breite von $90\mu s$ aufweisen. In der Darstellung in der Figur 3 wird die Breite dieser Signale übertrieben breit dargestellt. Es kommt daher bei einem Vergleich der Figuren 3 und 4 zu einer Überlappung der Signale d.h. in der Figur 4 werden bereits weitere Signale erzeugt die auf einer Auswertung der Breite der Signale der Figur 3 beruhen. Dies ist aber kein realer Effekt sondern nur durch die übertriebene Breite der Darstellung in der Figur 3 bedingt. Durch diese unterschiedliche Breite lässt sich für die Weiterverarbeitung der Signale des Sensors 19 zusätzlich die Drehrichtungsinformation verwenden. Wie aufgrund der Sensorsignale festgestellt werden kann, in welche Richtung sich die Welle bewegt, ist beispielsweise der DE 199 33 844 A1 entnehmbar.

Es sind aber auch andere Sensoren oder Mehrfachanordnungen von versetzten Sensoren bekannt, mit denen ebenfalls die Drehrichtung der Welle erkannt werden kann. In der Darstellung in der Figur 3 wird die Breite dieser Signale übertrieben breit dargestellt. Es kommt daher bei einem Vergleich der Figuren 3 und 4 zu einer Überlappung der Signale d.h. in der Figur 4 werden bereits weitere Signale erzeugt, die auf einer Auswertung der Breite der Signale der Figur 3 beruhen. Dies ist aber kein realer Effekt sondern nur durch die übertriebe Breite der Darstellung in der Figur 3 bedingt. Durch diese unterschiedliche Breite lässt sich für die Weiterverarbeitung der Signale des Sensors 19 zusätzlich die Drehrichtungsinformation verwenden. Wie aufgrund der Sensorsignale festgestellt werden kann, in welche Richtung sich die Welle bewegt, ist beispielsweise der Druckschrift DE 199 33 844 A1 entnehmbar.

In der Figur 3 wird beispielsweise ein Drehrichtungswechsel anhand der Signale zwischen den Zeitpunkten t5 und t6 dargestellt. Ab dem Zeitpunkt t6, an dem erkannt wurde, dass der Motor nun rückwärts läuft, wird der Adresspointer nun nicht mehr erhöht, sondern erniedrigt. Die Speicherung der darauffolgenden Zeitpunkte erfolgt nicht mehr in einer bestimmten Reihenfolge, sondern in einer umgekehrten Reihenfolge. Entsprechen diese Reihenfolge, muss bei den weiteren Berechnungen dann berücksichtigt werden, dass die weiteren Werte in dieser Reihenfolge dann abgelegt sind.

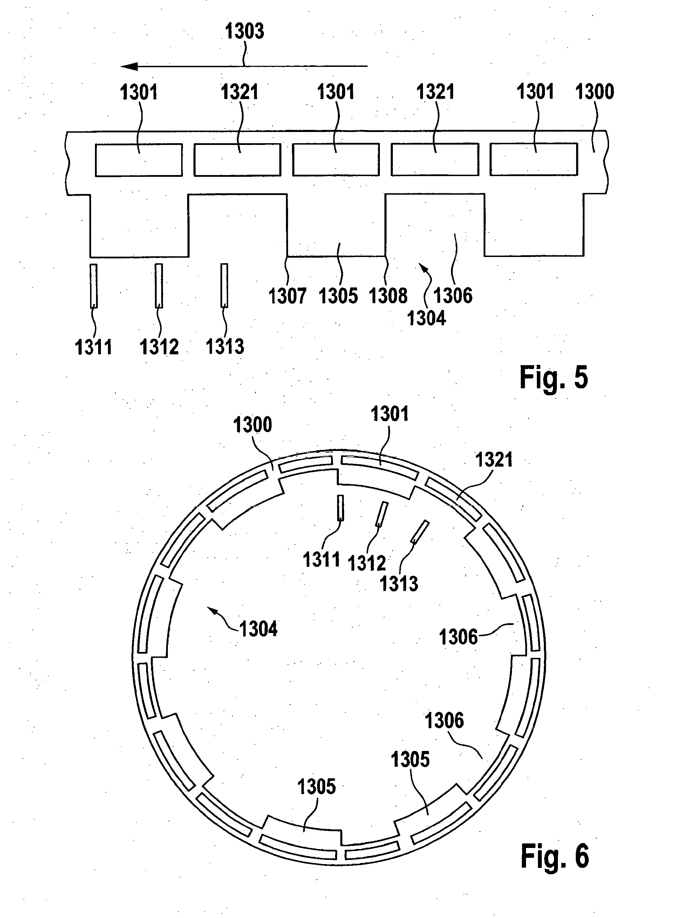

In der Figur 5 wird schematisch ein Rotor 1300 eines Elektromotors dargestellt. Der Rotor 1300 wird hier nicht als runder Rotor sondern in einer abgewickelten Darstellung, d. h. nicht als rundes Gebilde um eine Welle sondern als lineares Gebilde dargestellt. Diese Darstellung des Rotors 1300 dient nur zur vereinfachten graphischen Darstellung in der Figur 5. Real ist der Rotor 1300 als kreisförmige Struktur um eine Welle ausgebildet, wie dies in der Figur 6 gezeigt wird.

In der Figur 6 wird noch einmal als Übersicht der Rotor 1300 eines Elektromotors dargestellt. Es handelt sich um einen Elektromotor mit acht Poolpaaren, d. h. acht Nordpolen 1301 und acht Südpolen 1321, die jeweils im Wechsel angeordnet sind. Jedem Poolpaar 1301, 1321 ist eine Zahnstruktur 1304 mit einem Zahn 1305 und einer Zahnlücke 1306 zugeordnet. Diese Figur dient dazu den Gesamtaufbau des Rotors zu zeigen. Die Details der Zuordnung von Sensoren und Zahnlücken sind in der detaillierten Darstellung der Figur 5 erläutert.

In dem Rotor 1300 sind eingebettet Permanentmagneten 1301, 1321, die durch Anlegen von wechselnden äußeren Magnetfeldern durch entsprechende Spulen im Stator des Motors eine Kraft gegenüber dem Feld der Permanentmagnete 1301, 1321 erzeugt, die den Rotor 1300, beispielsweise in die durch den Pfeil 1303 gezeigte Richtung, bewegt. Die entsprechenden Ansteuerspulen sind hier nicht dargestellt. Die Permanentmagneten 1301 bildet einen magnetischen Nordpol und die Permanentmagneten 1321 einen magnetischen Südpol.

Der Rotor 1300 weist Zahnstrukturen 1304 auf, die jeweils aus einem Zahn 1305 und einer Zahnlücke 1306 bestehen. Im Bereich des Zahns 1305 ist der Rotor 1300 dicker ausgebildet, d. h. er bildet den Zahn 1305 und im Bereich der Zahnlücke 1306 ist der Rotor 1300 dünner ausgebildet und bildet so die Zahnlücke 1306. Für die weitere Diskussion ist es noch von Bedeutung, dass der Zahn 1305 eine Vorderseite 1307 und eine Rückseite 1308 besitzt, wobei die Vorderseite 1307 den Übergang von Zahnlücke 1306 zu Zahn 1305 und die Rückseite in der Bewegungsrichtung des Pfeils 1303 den Übergang zwischen Zahn 1305 und Zahnlücke 1306 kennzeichnet. Für die weitere Diskussion wird jetzt die in der Figur 5 links gezeigte Zahnstruktur 1304 als erste Zahnstruktur und die nächste Zahnstruktur in der Mitte der Figur 5 als zweite Zahnstruktur 1304 bezeichnet.

Der Rotor ist so aufgebaut, dass jedem Paar von Permanentmagneten 1301, 1321 eine Zahnstruktur 1304 zugeordnet ist. Den Zahnstrukturen 1304 gegenüberliegend sind drei Sensoren 1311, 1312, 1313 angeordnet, wobei der Abstand dieser Sensoren voneinander so gewählt ist, dass er jeweils ein Drittel der Periodizität der Zahnstrukturen 1304 entspricht. Dies bedeutet, dass der Abstand zwischen dem ersten Sensor 1311 und dem zweiten Sensor 1312 einem Drittel des Abstandes der Vorderseiten 1307 von zwei aufeinanderfolgenden Zahnstrukturen 1304 entspricht. Bei dieser Anordnung von Sensoren 1311, 1312, 1313 und Zahnstrukturen 1304 verhält es sich bei einer Bewegung des Rotors 1300 in Richtung des Pfeils 1303 so, dass eine festgelegte Abfolge von Signalen der drei Sensoren auftritt. Die Sensoren 1311, 1312, 1313 liefern immer dann eine logische Eins, wenn ein Zahn 1305 unmittelbar vor ihnen angeordnet ist und eine logische Null, wenn vor den Sensoren 1311, 1312, 1313 eine Zahnlücke 1306 angeordnet ist.

In der Darstellung der Figur 5 ist es beispielsweise so, dass die Sensoren 1311 und 1312 eine logische Eins ausgeben und der Sensor 1313 eine logische Null. Wenn sich nun der Rotor 1300 in Richtung des Pfeils 1303 weiterbewegt, so ändert sich der Signalpegel sobald der Sensor 1312 jenseits der Rückseite 1308 des ersten Zahnes ist. Der Sensor 1311 ist immer noch gegenüber dem Zahn 1305 angeordnet, während die Sensoren 1312 und 1313 beide gegenüber der Zahnlücke 1306 angeordnet sind. Die Sensoren liefern daher das Ausgangssignal 100. Bei einer weiteren Bewegung überschreitet dann der Sensor 1313 die Vorderseite 1307 des zweiten Zahns 1305 und das Signal der Sensoren ändert sich dann zu dem Wert 101. Wenn sich der dann der Rotor 1300 weiterbewegt, so sind beide Sensoren 1311, 1312 über der Zahnlücke 1306 der ersten Zahnstruktur gelegen und der dritte Sensor 1313 ist vor den Zahn 1305 der zweiten Zahnstruktur.

Die Sensoren geben somit das Signal 001 aus. Bei der weiteren Bewegung folgen dann die Signale 011 und bei einer abermals weiteren Bewegung das Signal 010. Wenn sich der Rotor 1300 dann noch weiterbewegt, erfolgt wieder die Ausgabe des Signals 110, wobei dann die Sensoren vor der zweiten Zahnstruktur 1304 so angeordnet sind, wie in der Figur 5 bezüglich der ersten Zahnstruktur 1304 gezeigt ist. Bei einem Motor mit p Polpaaren beträgt der Winkel zwischen den Sensoren (1311 zu 1312 bzw. 1312 zu 1313) 360°/(3*p), d.h. in dem betrachteten Fall mit acht Polpaaren 15°. Eine Änderung genau eines Sensorwerts erfolgt dann für jeweils 7,5° Drehung des Rotors. Bei der weiteren Bewegung in Richtung des Pfeils 1303 wird immer wieder diese Signalfolge ausgegeben, nämlich 110, 100, 101, 001, 011, 010. Wenn sich der Elektromotor jedoch in die entgegengesetzte Richtung bewegt, so wird diese Signalfolge in umgekehrter Reihenfolge auftreten, wodurch sich eine Bewegung des Elektromotors in die eine Richtung oder die andere Richtung klar unterscheiden lässt.

Die Weiterverarbeitung der Signale der drei Sensoren 1311, 1312 1313 erfolgt bspw. durch eine Signalverarbeitungsvorrichtung in ähnlicher Weise, wie bereits für die Signale des Sensor 19 beschrieben wurde. Immer wenn ein Signal der Sensoren 1311, 1312 oder 1313 seinen Signalpegel verändert, liest das Speicherungsmittel den Zeitpunkt, zu dem das Signal einging, von einem Zeitgeber ein und speichert diesen Zeitpunkt in einem Speicher. Die Speicherung in dem Speicher erfolgt in einer vorgegebenen Reihenfolge, d. h. beispielsweise die Speicherung des Zeitpunkts des Eingangs des Signalübergangs von 110 zu 100 erfolgt in einem Speicherplatz, wodurch dann klar ist, dass die Speicherung des Zeitpunkts, zu der der Signalübergang von 100 zu 101 eingeht, dann in einem weiteren Speicherplatz erfolgt. Da die Sensoren 1311, 1312 und 1313 insgesamt nur sechs Zustände aufweisen (die Zustände 000 und 111 treten nicht auf, wie vorstehend in dem Ablauf beschrieben), ist durch einen Speicherung auf nur sechs Speicherplätzen eine vollständige Weiterbewegung des Rotors 1300 um ein Polpaar 1301, 1321 gespeichert. Die Bewegung des Rotors bezüglich eines Polpaars wird als elektrische Umdrehung bezeichnet, während die Bewegung bezüglich aller acht Polpaare als mechanische Umdrehung bezeichnet wird. Um aber auch noch andere Einflüsse auf die Drehzahl zu untersuchen, kann es auch sinnvoll sein, eine größere Zahl von Speicherplätzen (zum Beispiel für eine komplette mechanische Umdrehung) vorzusehen. Die gespeicherten Zeiten werden durch einen entsprechenden Adresspointer verwaltet. Durch die festgelegte Signalfolge der drei Sensoren 1311, 1312 und 1313 kann zu jedem Signalwechsel die Drehrichtung des Elektromotors ermittelt werden. Diese Information kann dazu genutzt werden, um entsprechend den Adresspointer in die eine oder andere Richtung zu zählen. Anhand der gespeicherten Zeitpunkte werden eine Vielzahl von Positionsimpulsen 150 erzeugt die dann jeweils die Position des Elektromotors angeben. Dabei ist es aber im Unterschied zu einem Verbrennungsmotor nicht erforderlich, eine komplette Bewegung des Rotors 1300 abzubilden, sondern es ist, für den Zweck der Ansteuerung des Elektromotors nur notwenig, die Position eines Polpaares zu kennen, da bei einer Verdrehung des Rotors um ein Polpaar wieder die gleiche Ausgangsstellung vorliegt. Das trifft aber nur dann zu, wenn alle Polpaare exakt gleich positioniert sind. Wenn es konstruktive Unterschiede der Pole gibt, kann es sinnvoll sein, auch Messwerte für eine gesamte mechanische Umdrehung des Motors zu speichern, weil man dann ggf. auf die Messwerte von einer Umdrehung vorher zurückgreifen kann. Die möglichen Abweichungen werden nachfolgend detailliert in einem Beispiel beschrieben.

Gegebenenfalls können auch für den Elektromotor ein weiterer Adresspointer und entsprechende Speicherplätze vorgesehen sein. Im Unterschied zur Auswertung von Kurbelwellensignalen sind in diesen Speicherplätzen aber keine Information bezüglich der zu erwartenden Zähne, sondern Information bezüglich Fertigungstoleranzen des Geberrades des Elektromotors oder der Anordnung der drei Sensoren 1311, 1312, 1313 gespeichert. Diese Informationen beinhalten Informationen, wie viele Positionsimpulse 150 bis zum Eintreffen des nächsten Signalübergangs zu erwarten sind. Fertigungstoleranzen können sich auf die periodisch nacheinander abfolgende Signalfolge der sechs möglichen Zustände der Sensoren richten, beispielsweise könnte sich aufgrund von Fertigungsschwankungen im Geberrad, bei der Anordnung der Permanentmagnete oder der Lücken 1305 bzw. Zähne 1306 im Rotor bei kontinuierlicher Drehzahl die Zeitdauer des Übergangs der Sensorwerte von 110 zu 100 von der Zeitdauer des Übergangs von 011 zu 010 unterscheiden. Diese Abweichungen wiederholen sich dann alle sechs Signalwechsel und können durch entsprechende Korrekturwerte auf den Speicherplätzen usw. korrigiert werden. Weitere Korrekturwerte können die Fertigungstoleranzen des gesamten Rotors betreffen, beispielsweise Abweichungen an den Zahnstrukturen 1304, die nur eine Stelle an dem ganzen Rotor 1300 betreffen.

Für diese Abweichungen müssen dann natürlich Speicherplätze für den ganzen Rotor 1300 vorgesehen sein und es muss eine Synchronisation des weiteren Adresspointer mit dem Rotor 1300 erfolgen. Dies kann alternativ entweder durch einen weiteren Sensor oder durch Kennzeichnung einer Stelle des Rotors 1300 in ähnlicher Weise wie in der Figur 1 oder durch einen Lernvorgang erfolgen. Solch ein Lernvorgang wertet insbesondere Betriebsphasen des Elektromotors mit einem relativen Gleichlauf des Motors aus, beispielsweise eine Betriebsphase in der ein mit dem Elektromotor betriebenes Fahrzeug ausrollt. In derartigen Phasen kann gelernt werden welche Unterschiede es bezüglich des Eintreffens der Signalübergänge gibt und es können entsprechende Korrekturinformationen in den Speicherplätzen gespeichert werden. Diese Informationen werden dann genutzt, um unterschiedliche Anzahlen von Positionsimpulsen 150 auszugeben, je nach dem, wann mit dem Eintreffen des nächsten Signalwechsels zu rechnen ist.

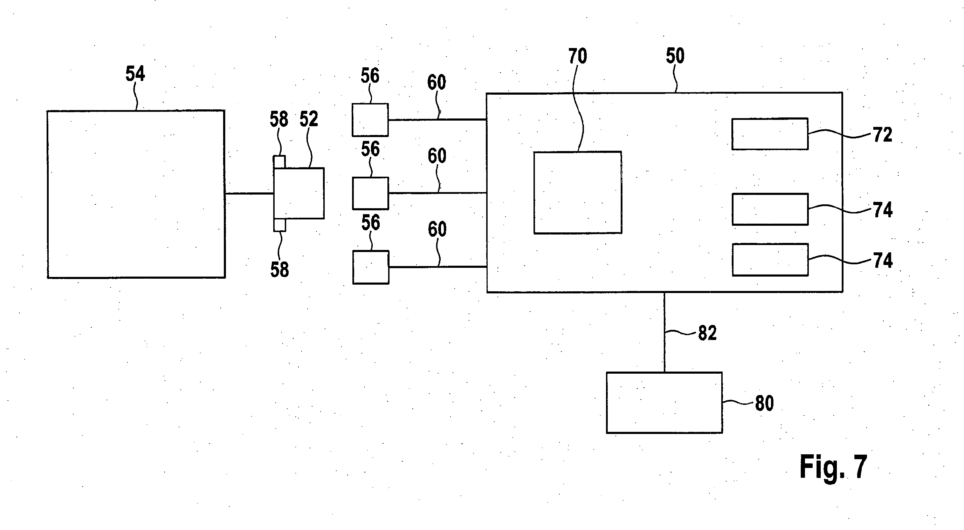

In Figur 7 ist eine Anordnung zur Durchführung des Verfahrens insgesamt mit der Bezugsziffer 50 versehen dargestellt. Diese Anordnung 50 dient zur systematischen Betrachtung bzw. Behandlung von Fehlern bei der Übertragung von Positionsinformationen bzw. Positionssignalen mit einem Positionsgeber 52, der an einem Motor 54 vorgesehen ist.

Weiterhin sind drei Sensoren 56 dargestellt, die auf Grundlage von Markierungen 58 des Positionsgebers 52 in Abhängigkeit von dessen Position, bspw. der Winkellage, und damit in Abhängigkeit der Position und/oder Bewegung bzw. Bewegungsrichtung des Motors 54 Positionssignale 60 erzeugen. Die Positionssignale 60 der einzelnen Sensoren 56 können für eine weitere Verarbeitung miteinander verknüpft werden.

In der Schaltungsanordnung 50 ist eine zentrale Recheneinheit bzw. eine CPU 70 vorgesehen. Weiterhin ist ein erster Speicherbereich 72 und zwei weitere Speicherbereiche 74 vorgesehen. In dem ersten Speicherbereich 72 ist ein Profil zu den Markierungen 58 des Positionsgebers 52 bzw. zu Abständen zwischen den Markierungen 58 abgelegt. Das Profil kann während des Betriebs durch die CPU 70 aktualisiert bzw. adaptiert werden.

Weiterhin zeigt die Darstellung eine Winkeluhr 80, die über eine Leitung 82, über die Impulse übertragen werden, mit der Anordnung 50 verbunden ist.

In den beiden weiteren Speicherbereichen 74 werden Kenngrößen zu erfassten Positionssignalen 60 abgelegt. Dabei wird ein Adresszeiger bei jedem relevanten Positionssignal 60 inkrementiert, wobei eine Synchronisation zwischen den Positionssignalen 60 und dem Profil hergestellt wird, sobald die genaue Position des Motors bekannt ist. Diese Synchronisation kann durch die CPU vorgenommen werden, indem die Adresspointer zueinander entsprechend gesetzt werden. Sobald diese Synchronisation vorgenommen wurde, können die Informationen aus dem Profil für die Ausgabe von Sub-Impulsen für die Winkeluhr 80 unter der Berücksichtigung von den im Profil eingetragenen Werten (fehlende Zähne, Ausfall eines Sensors und konstruktiv bedingte Abweichungen) vorgenommen werden.

In einer weiteren Ausgestaltung der Erfindung können die beiden Speicherbereiche 74 unterschiedliche groß sein und mit jeweils einem separaten Adresspointer versehen sein. Das ist insbesondere dann von Vorteil, wenn man für die gespeicherten Datenwerte einmal die virtuellen Inkremente mit berücksichtigt, bspw. für die Zeitstempelwerte der Flanken, und einmal nicht, z.B. für die Inkrementdauer.

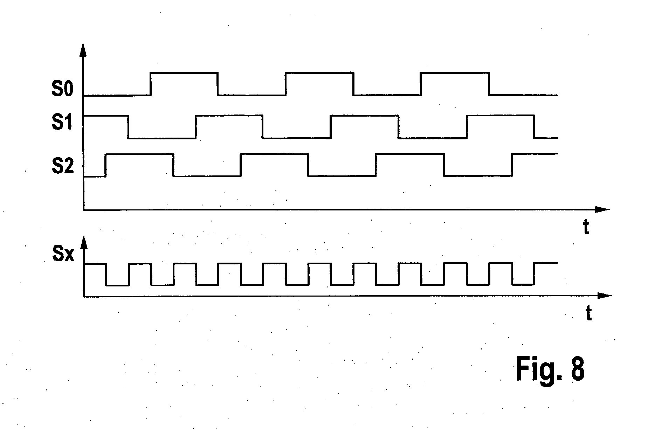

Figur 8 zeigt Signalverläufe an drei Sensoren S0, S1 und S2 eines Elektromotors bei konstanter Drehzahl. Die drei Sensoren sind bei nur einem Polpaar des Motors so angeordnet, dass sie um jeweils 120° zueinander versetzt sind. Im Beispiel des betrachteten Motors mit acht Polpaaren müssen jeweils 15° zwischen den Sensoren liegen. Aus den drei Signalen wird durch antivalente Verknüpfung ein kombiniertes Signal Sx gebildet. Dieses Signal Sx kann dann in ähnlicher Weise wie das Signal des Sensors 19 bei einem Verbrennungsmotor benutzt werden, mit dem Unterschied, dass bei Sx jede Änderung des Signals und nicht nur eine bestimmte Flanke auszuwerten ist.

## Patentansprüche

1. Verfahren zur systematischen Behandlung von Fehlern für eine Winkeluhr (80) bei der Übertragung von Positionsinformationen mit einem Positionsgeber (52), **dadurch gekennzeichnet, dass** der Positionsgeber (52) über Markierungen (58) verfügt, die mit mindestens einem Sensor (56) erfasst werden, wobei ein Profil in Zusammenhang mit diesen Markierungen (58) in einen ersten Speicherbereich (72) abgelegt wird, wobei dieser erste Speicherbereich (72) durch einen ersten Adresszeiger adressiert wird, der mit jedem Positionssignal (60) inkrementiert wird, wobei der Positionsgeber (52) in Abhängigkeit seiner Position durch die Markierungen (58) Positionssignale (60) erzeugt, die als Informationen Kenngrößen tragen, die in mindestens einen weiteren Speicherbereich (74) abgelegt werden, beginnend mit einem Adresszeigerwert eines zweiten Adresszeigers, wobei dieser zweite Adresszeiger mit jedem Positionssignal (60) inkrementiert wird, und wobei eine Synchronisation zwischen den Kenngrößen in dem weiteren Speicherbereich (74) und dem Profil in dem ersten Speicherbereich (72) dadurch hergestellt wird, dass die beiden Adresszeiger bis auf eine Differenz zueinander gleich sind und die in dem Profil gespeicherten Werte dazu genutzt werden, die Anzahl der an die Winkeluhr (80) ausgegebenen Impulse zu ändern.

2. Verfahren nach Anspruch 1, bei dem die Synchronisation erzielt wird, indem ein Adresszeiger von dem Profil entsprechend gesetzt wird.

3. Verfahren nach Anspruch 1 oder 2, bei dem als Positionsgeber (52) ein Geberrad (10) verwendet wird, das über in Zahnabständen (14) angeordnete Zähne (12) verfügt, wobei ein Profil der Zahnabstände (14) abgelegt wird.

4. Verfahren nach Anspruch 3, bei dem in dem Profil für jeden Zahnabstand (14) ein Speicherwort reserviert ist, in dem ein Feld vorgesehen ist, das dem Zahnabstand (14) zugeordnete Anzahl von nominellen Abstandswerten enthält, und ein weiteres Feld, in dem eine Abweichung des Zahnabstands (14) von einem idealen Abstand eingetragen ist.

**5.** Verfahren nach einem der Ansprüche 1 bis 4, bei dem der Positionsgeber (52) Impulse erzeugt, die mit einem Zeitstempel von einer Zeitbasis versehen werden, aus der Differenz der Zeitstempel Differenzzeiten berechnet werden und als Kenngrößen Zeitstempel für empfangene Impulse und die Zeitdauern zwischen jeweils zwei Impulsen berechnet werden.

**6.** Verfahren nach einem der Ansprüche 1 bis 5, bei dem der Adresszeiger inkrementiert wird, wenn ein relevantes Positionssignal (60) vorliegt.

**7.** Verfahren nach einem der Ansprüche 1 bis 6, bei dem der Adresszeiger mit einer zentralen Recheneinheit (70) synchronisiert wird.

**8.** Verfahren nach einem der Ansprüche 1 bis 7, bei dem mehrere Sensoren (56) verwendet werden, deren Daten separat ausgewertet werden.

**9.** Verfahren nach Anspruch 8, bei dem die Daten der Sensoren (56) miteinander verknüpft werden.

**10.** Anordnung zur systematischen Behandlung von Fehlern für eine Winkeluhr (80) bei der Übertragung von Positionsinformationen mit einem Positionsgeber (52), zur Durchführung eines Verfahrens nach einem der Ansprüche 1 bis 9.

**Claims**

**1.** Method for systematically handling errors for an angle clock (80) when transmitting position information with a position encoder (52), **characterized in that** the position encoder (52) has markings (58) which are detected using at least one sensor (56), a profile being stored, in conjunction with these markings (58), in a first memory area (72), this first memory area (72) being addressed by means of a first address pointer which is incremented with each position signal (60), the position encoder (52) generating position signals (60) on the basis of its position by means of the markings (58), which position signals have, as information, characteristic variables which are stored in at least one further memory area (74) starting with an address pointer value of a second address pointer, this second address pointer being incremented with each position signal (60), and the characteristic variables in the further memory area (74) and the profile in the first memory area (72) being synchronized by virtue of the two address pointers being the same as one another, apart from a difference, and by virtue of the values stored in the profile being used to change the number of pulses output to the angle clock (80).

**2.** Method according to Claim 1, in which the synchronization is achieved by virtue of an address pointer being accordingly set by the profile.

**3.** Method according to Claim 1 or 2, in which an encoder wheel (10) having teeth (12) arranged at tooth spacings (14) is used as the position encoder (52), a profile of the tooth spacings (14) being stored.

**4.** Method according to Claim 3, in which a memory word is reserved in the profile for each tooth spacing (14), a field containing a number of nominal spacing values associated with the tooth spacing (14) and a further field, in which a deviation of the tooth spacing (14) from an ideal spacing is entered, being provided in said memory word.

**5.** Method according to one of Claims 1 to 4, in which the position encoder (52) generates pulses which are provided with a time stamp from a time base, difference times are calculated from the difference in the time stamps, and time stamps for received pulses and the time periods between two pulses in each case are calculated as characteristic variables.

**6.** Method according to one of Claims 1 to 5, in which the address pointer is incremented if there is a relevant position signal (60).

**7.** Method according to one of Claims 1 to 6, in which the address pointer is synchronized with a central computing unit (70).

**8.** Method according to one of Claims 1 to 7, in which a plurality of sensors (56) whose data are evaluated separately are used.

**9.** Method according to Claim 8, in which the data from the sensors (56) are linked to one another.

**10.** Arrangement for systematically handling errors for an angle clock (80) when transmitting position information with a position encoder (52), for carrying out a method according to one of Claims 1 to 9.

**Revendications**

**1.** Procédé de traitement systématique des erreurs pour un indicateur d'angle à cadran (80) lors de la transmission d'informations de position avec un codeur de position (52), **caractérisé en ce que** le codeur de position (52) dispose de repères (58) qui sont détectés avec au moins un capteur (56), un profil en association avec ces repères (58) étant enregistré dans une première zone de mémoire (72), cette première zone de mémoire (72) étant adressée par un premier pointeur d'adresse qui est incrémenté avec chaque signal de position (60), le codeur de position (52) générant des signaux de position (60) par le biais des repères (58) en fonction de sa position, lesquels transportent comme informations des grandeurs caractéristiques qui sont enregistrées dans au moins une zone de mémoire supplémentaire (74), en commençant par une valeur de pointeur d'adresse d'un deuxième pointeur d'adresse, ce deuxième pointeur d'adresse étant incrémenté avec chaque signal de position (60), et une synchronisation entre les grandeurs caractéristiques dans la zone de mémoire supplémentaire (74) et le profil dans la première zone de mémoire (72) étant réalisée **en ce que** les deux pointeurs d'adresse sont égaux l'un à l'autre à l'exception d'une différence et les valeurs enregistrées dans le profil sont utilisées pour modifier le nombre d'impulsions délivrées à l'indicateur d'angle à cadran (80).

2. Procédé selon la revendication 1, selon lequel la synchronisation est obtenue en ce qu'un pointeur d'adresse est défini en conséquence par le profil.

3. Procédé selon la revendication 1 ou 2, selon lequel le codeur de position (52) utilisé est une roue de codeur (10) qui dispose de dents (12) arrangées en espacements de dents (14), un profil des espacements de dents (14) étant enregistré.

4. Procédé selon la revendication 3, selon lequel un mot de mémoire est réservé dans le profil pour chaque espacement de dents (14), dans lequel est prévu un champ qui contient le nombre de valeurs d'espacement nominales associé à l'espacement de dents (14) et un champ supplémentaire dans lequel est consignée une divergence de l'espacement de dents (14) par rapport à un espacement idéal.

5. Procédé selon l'une des revendications 1 à 4, selon lequel le codeur de position (52) génère des impulsions qui sont dotées d'un marqueur temporel d'une base de temps, des temps différentiels sont calculés à partir de la différence entre les marqueurs temporels et le marqueur temporel pour les impulsions reçues ainsi que les durées entre deux impulsions respectives sont calculés en tant que grandeurs caractéristiques.

6. Procédé selon l'une des revendications 1 à 5, selon lequel le pointeur d'adresse est incrémenté lorsqu'un signal de position (60) pertinent est présent.

7. Procédé selon l'une des revendications 1 à 6, selon lequel le pointeur d'adresse est synchronisé avec une unité de calcul (70) centrale.

8. Procédé selon l'une des revendications 1 à 7, selon lequel plusieurs capteurs (56) sont utilisés, dont les données sont interprétées séparément.

9. Procédé selon la revendication 8, selon lequel les données des capteurs (56) sont combinées entre elles.

10. Arrangement de traitement systématique des erreurs pour un indicateur d'angle à cadran (80) lors de la transmission d'informations de position avec un codeur de position (52), destiné à la mise en oeuvre d'un procédé selon l'une des revendications 1 à 9.

Fig. 1

Fig. 2

Fig. 3

Fig. 4

**1303**

1301    1321    1301    1321    1301    1300

1307   1305   1308   1306

**1304**

1311    1312    1313

**Fig. 5**

1300      1301

1321

1311 1312

1313

**1304**

1306

1306

1305

1305

1305

**Fig. 6**

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10063755 A1
- DE 102005047922 A1
- EP 1400785 A2
- US 5117681 A
- DE 19933844 A1